# FASCICULE DE BREVET EUROPEEN

(11) **EP 2 572 474 B1**
(45) Date de publication et mention de la délivrance du brevet: **21.06.2017**
(21) Numéro de dépôt: 11722376.8
(22) Date de dépôt: 19.05.2011
(51) Int. Cl.: H04L 12/28, H04L 29/06, H04W 84/18, H04W 28/16, H04W 40/34

(54) **ARCHITECTURE POUR RESEAU AD-HOC**
AD-HOC NETZWERKARCHITEKTUR
AD-HOC NETWORK ARCHITECTURE

(30) Priorité: 21.05.2010 FR 1002156
(43) Date de publication de la demande: 27.03.2013
(73) Titulaire: THALES, 92400 Courbevoie (FR)
(72) Inventeur: MARTIN, Béatrice, F-92700 Colombes (FR)
(74) Mandataire: Dudouit, Isabelle
(86) Numéro de dépôt international: PCT/EP2011/058202
(87) Numéro de publication internationale: WO 2011/144712

(56) Documents cités:
- EP-A1- 1 289 197
- TUNA GUVEN ET AL: "A multi-layer approach for seamless handoff in ad hoc networks with wireless heterogenity", MILITARY COMMUNICATIONS CONFERENCE, 2009. MILCOM 2009. IEEE, IEEE, PISCATAWAY, NJ, USA, 18 octobre 2009 (2009-10-18), pages 1-7, XP031609534, ISBN: 978-1-4244-5238-5

## Description

L'invention concerne une architecture de pile protocolaire pour un réseau sans infrastructure de type Ad-Hoc adaptée pour différentes technologies radio et différentes formes d'onde. Les équipements radio des réseaux dans lesquels la pile protocolaire selon l'invention peut s'appliquer s'auto-organisent pour communiquer entre eux en utilisant la présente invention.

Les réseaux Ad Hoc évoluent actuellement avec différentes qualité de service ou QoS, du bas débit vers un haut débit, avec des contraintes de latence du temps réel vers des latences relâchées (relaxed latency). Les services peuvent être soit orientés paquets, soit orientés connexion. Un exemple se trouve dans EP 1289197. Un des problèmes majeurs est de garantir l'interopérabilité dans la gestion de flotte des terminaux mobiles, composés d'équipements provenant de plusieurs fabricants, dans des réseaux développés à différents niveaux et pour des applications diverses. Les fabricants offrent ainsi des interfaces standardisées.

Un autre objectif est de diminuer les coûts de développement, de production et de maintenance tout en conservant une certaine confidentialité sur l'ensemble du contenu du produit final.

Il existe des architectures pour les réseaux cellulaires du monde civil, dans lesquelles les liens radio sont reconfigurables en ligne. Par exemple, on peut citer les systèmes cellulaires. Malheureusement, ces architectures sont faites pour des réseaux avec un point d'accès centralisé (communications avec des infrastructures) et n'intègrent pas l'aspect réseau sans point d'accès central, ou réseau Ad Hoc, le relayage, la sécurité et l'auto-configuration.

Il existe aussi des architectures pour les réseaux de communication mobile privé ou PMR (Private Mobile Radio Communication) intégrant un peu de sécurité et un peu de réseau de type Ad-Hoc, mais le mode Ad-Hoc est limité à 2 terminaux.

Il existe aussi des architectures préliminaires pour des réseaux Ad hoc, par exemple pour le réseau de communication sans fil connu sous l'abréviation WiFi décentralisé. Ces architectures ne sont toutefois pas assez complètes pour supporter, par exemple, la mobilité des terminaux, un mode de transmission adaptatif, une possibilité de se reconfigurer, la supervision à distance, la possibilité d'intégrer différents protocoles et algorithmes, etc. Ces architectures sont «câblées » et non flexibles.

Pour l'aspect supervision à distance, il existe des solutions dans le système 3GPP (3rd Generation Partnership Project) pour la supervision d'infrastructures et de cellules et de zones de couverture, mais pas de terminaux ni de réseaux Ad-Hoc. Les architectures de l'art antérieur connues du Demandeur ne résolvent toutefois pas les points suivants :
- le relayage supportant à la fois des services points à points et de diffusion,
- l'aspect ad-Hoc (routage, auto-configuration, etc.) en mode à plat ou non hiérarchisé (réseau sans mise en oeuvre de rôles privilégiés pour l'organisation des ressources ou du routage dans le réseau) comme en mode clustérisé et hiérarchisé, et avec supervision.
Quelques définitions utilisées pour la description vont être données ci-après : AHMM est un module de gestion de mobilité Ad Hoc,
RSN : un module de routage radio,
RRC un module de gestion de la ressource radio,
L2RTP est une couche ou protocole adapté à traiter le relayage régénératif au niveau d'un paquet de données, au niveau radio entre des groupes, MAC : la couche de contrôle d'accès au support.

Dans la suite de la description, les mots pile protocolaire, architecture selon l'invention, sont utilisées pour désigner le même objet.

L'invention concerne notamment une pile protocolaire qui repose sur l'insertion et l'agencement de nouveaux modules par mécanismes « à 2 étages » pour la gestion des ressources radio, un processus lent dans le module de gestion de la ressource radio RRC, un processus rapide dans la couche MAC plus connue sous l'expression anglo-saxonne « Medium Access Control », les couplages RRC/RSN, RSN/AHMM et la façon d'organiser l'optimisation inter-couches autour de ces modules qui s'appuient sur des informations remontées par toutes les autres couches; le fait qu'une partie du module de gestion de mobilité AHMM soit ramenée dans le plan d'accès pour gérer la mobilité entre groupes dans les solutions de groupements (ou clustérisés); pour la gestion des transferts automatique intercellulaire ou en anglo-saxon « handover », est dans le module RRC.

Pour l'aspect relayage, la pile protocolaire selon l'invention supporte plusieurs modes : transparent et régénératif.

L'invention concerne une pile protocolaire pour réseau de type Ad-Hoc comprenant des modules existants d'architectures de troisième génération ouu 3GPP, ladite pile protocolaire comprenant un plan d'accès radio, un module de gestion AHMM et un module de contrôle de ressource radio RRC, ledit réseau de type Ad-Hoc pouvant être organisé en plusieurs groupes ou clusters caractérisé en ce que ladite pile comporte en plus lesdits éléments suivants :
- Un module de routage RSN disposé entre le module de gestion AHMM et le module de contrôle de ressource radio, une partie de la gestion de mobilité étant gérée dans le plan d'accès afin de gérer des transferts ou « handovers » entre les groupes, dans le cas d'un réseau organisé en groupes d'utilisateurs ou « clusterisé »,
- Le module RRC est adapté à gérer les décisions de « handover » et la gestion de la ressource radio,
- Ladite pile protocolaire comprenant en plus, une couche L2RTP adaptée à traiter le relayage régénératif au niveau radio au niveau d'un paquet de données,
- Un plan de sécurité permettant d'isoler des fonctions de sécurité.

Les modules AHMM/RSN/RRC sont par exemple associés de façon à centraliser les traitements d'optimisation intercouches en limitant le volume des échanges d'information intercouches, cet assemblage étant interfacé par le plan de contrôle à l'ensemble des autres couches et fonctions de la forme d'onde utilisée dans le réseau.

L'architecture peut comporter en plus un module de supervision à distance OAM.

Selon une variante de réalisation, l'architecture comporte un module de supervision locale OAM, au niveau de chacun des noeuds du réseau Ad Hoc.

Selon une autre variante de réalisation, dans le module de contrôle des ressources radio, la pile protocolaire comporte un processus lent et le module de contrôle d'accès au medium ou MAC est adapté pour séquencer l'accès au support physique d'une façon temps réel et réaliser des adaptations rapides du format de transmission des données parmi un ensemble de formats fournis par le module RRC, sur une base de, trame par trame, et en accord avec différents types de fluctuations telles que les variations de flux de source, la configuration de transmission discontinue, la qualité de service offerte par les différents chemins de relayage.

La pile protocolaire comporte, par exemple, une étape de reconfiguration dynamique des algorithmes des couches RSN et RRC.

Selon un mode de réalisation, la pile protocolaire comporte une étape de reconfiguration des algorithmes de gestion des ressources radio de RRC et une étape de reconfiguration des couches MAC et PHY.

D'autres caractéristiques et avantages du dispositif selon l'invention apparaîtront mieux à la lecture de la description d'un exemple de réalisation donné à titre illustratif et nullement limitatif annexé des figures qui représentent :
- La figure 1, un synoptique du périmètre applicatif de l'architecture selon l'invention,
- La figure 2, l'architecture Qualité de Service ou QoS selon l'invention,
- La figure 3, un synoptique complet de l'architecture selon l'invention,
- La figure 4, un exemple de protocole dans le plan utilisateur,
- La figure 5, les transitions des rôles ou états pris par un noeud,
- La figure 6, un exemple pour les échanges simplifiés intercouches à partir d'un réseau à plat, non hiérarchisé et reconfiguré dynamiquement en cours d'opération en une organisation avec routage hiérarchique, et
- La figure 7, un exemple de mise en oeuvre du procédé et de la pile protocolaire selon l'invention.

Le périmètre de l'architecture proposée concerne, notamment, le plan d'accès, c'est-à-dire les fonctionnalités entre d'une part la radiofréquence RF et d'autre part l'application et le routage inter-réseaux.

En résumé, la pile de protocole ou pile protocolaire selon l'invention est basée sur une ossature héritée des systèmes cellulaires, tels que les systèmes de troisième génération 3GPP, dans laquelle est intercalé un module de routage RSN entre la gestion de mobilité AHMM et le contrôle de ressource radio RRC. Dans la présente invention, une partie de la gestion de la mobilité est introduite dans le plan d'accès pour gérer des « transferts de liens radio» ou « handovers » entre zones de couverture, et, dans le cas d'une solution « clustérisée », entre clusters. La pile de protocole est compatible de plusieurs méthodes de routage ; à plat, clustérisé, et avec possibilité de passage d'un mode à l'autre en cours de fonctionnement.

Une couche L2RTP a été ajoutée pour traiter le relayage régénératif (cas de régénération au niveau paquet) au niveau radio. La pile protocolaire comporte aussi une possibilité de supervision à distance avec un module OAM. Pour la sécurité, un plan en parallèle a été introduit. Ce plan a notamment pour fonction d'isoler les fonctions de sécurité dans une carte gérant la sécurité telle qu'une carte commercialisée sous la marque INFOSEC et qui permet à ce plan de sécurité de contrôler toutes les couches activation/configuration/inhibition.

Une supervision locale est également possible avec le module OAM, ce qui est compatible de la radio logicielle SDR.

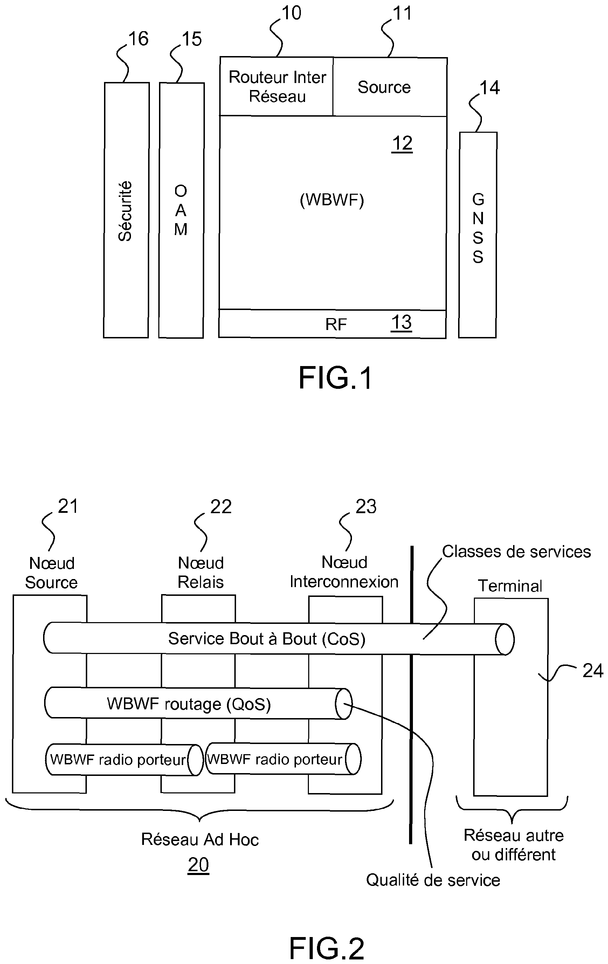

La figure 1 schématise un exemple d'architecture selon l'invention en charge des protocoles qui sont relatifs au milieu de transmission, i.e, l'interface radio de façon qu'elle gère toutes les caractéristiques de la couche physique à la mise en réseau ad-hoc. La pile protocolaire selon l'invention est notamment dessinée de façon à s'interconnecter avec d'autres réseaux pour établir un réseau compatible IP à travers la notion des interfaces ouvertes standardisées.

En utilisant une analogie avec le langage civil des réseaux cellulaires 2G/3G, le domaine de l'architecture selon l'invention correspond au domaine de l'accès "Access Stratum" c'est à dire aux couches d'accès physiques, comme il est illustré à la figure 1. Les interfaces avec des couches fonctionnelles non accès NAS ou « non access stratum » sont standardisées par des classes de services ou CoS.

Au niveau le plus élevé, l'architecture selon l'invention s'interface avec des sources de trafic 11, telles que le trafic Internet IP ou non IP, et le routage 10 inter réseau. L'architecture selon l'invention prend en charge le routage des chemins radio multi-sauts à l'intérieur d'une couverture radio donnée. Au niveau le plus bas, l'architecture selon l'invention ou pile protocolaire s'interface avec le module radio fréquence RF à travers un convertisseur RF 13, i.e, le niveau de symboles modulés.

L'architecture selon l'invention offre des facilités pour chiffrer des données en plus de la procédure de chiffrement appliquée au niveau applicatif (niveau application). Ceci permet notamment la protection du protocole de signalisation intra-réseau. Des protocoles de sécurité, la protection des données et du signal physique sont aussi supportés.

Une interface avec des opérations de maintenance OAM, 15, permet une supervision locale et/ou à distance.

En option, l'architecture ou pile protocolaire selon l'invention peut être interfacée avec un récepteur de géolocalisation et navigation par système satellite connue sous l'abréviation anglo-saxonne « GNSS » pour les fonctions de synchronisation et de localisation.

La figure 2 schématise la partie Qualité de Service offerte par l'architecture selon l'invention au niveau d'un réseau ad-hoc 20 comprenant, par exemple, un noeud source 21, un noeud relais 22, un noeud interconnexion 23 et un terminal 24 pouvant appartenir au même réseau ou à un réseau différent. La Qualité de Service de Bout-en-bout est gérée au niveau de la couche fonctionnelle NAS avec le support de la couche accès. Par exemple, pour les services IP, la collaboration entre les couches accès et les couches NAS est réalisée avec le champ permettant l'attribution de niveaux de services au trafic réseau ou DSCP (Differentiated Services Code Point) des classes de services CoS requises.

Au sein d'une couche accès, deux niveaux de qualité de service QoS sont définis : au niveau lien radio entre deux noeuds voisins et au niveau routage entre des noeuds frontières (frontières entre réseaux).

Une classe de service CoS est convertie en qualité de service QoS de l'interface radio selon l'invention pendant la phase de négociation lorsque le service est établi. La Qualité de service de l'architecture selon l'invention est caractérisée par : un débit minimum/maximum, un délai de transfert maximum, la variation du délai de jigue (ou " jitter"), le taux d'erreur, la priorité, le nombre maximum de sauts radio, etc. Ces paramètres de qualité sont convertis en paramètres de routage (par l'algorithme de routage) et des paramètres de transmission (modulation, codage de canal de transmission, etc.)

Les mécanismes pour gérer/offrir la qualité de service sont connus de l'art antérieur et ne seront donc pas redécrits.

### Pile protocolaire

La pile protocolaire de l'architecture selon l'invention hérite d'une structure de couche Interconnexion de systèmes ouverts ou OSI et est enrichie avec une approche d'optimisation inter-couches (connue sous l'abréviation anglo-saxonne « cross-layer ») pour la gestion de l'aspect Ad-Hoc et de la sécurité. Elle supporte aussi la structure de niveaux d'information des standards 3G, i.e, les canaux logiques, de transport et les concepts de format de transport associés, les canaux physiques et les formats de transmission associés.

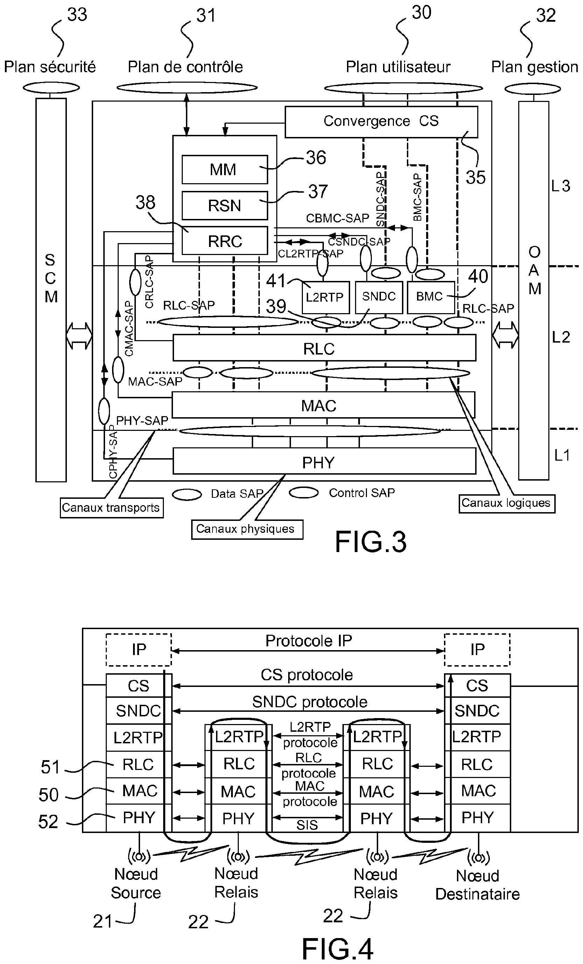

La pile protocolaire selon l'invention est faite de 4 plans (figure 3): un plan utilisateur 30, un plan de contrôle 31, un plan de gestion 32 et un plan de sécurité 33. Le plan utilisateur suit les règles OSI connues de l'Homme du métier alors que les plans de contrôle, sécurité et gestion réalisent la transversalité pour l'optimisation inter couches.

Le plan utilisateur 30 prend en charge des échanges de données (trafic utilisateur et signalisation) au niveau de l'interface radio. La communication entre les couches est réalisée avec des primitives de Services à travers des points d'accès services de données connues sous l'abréviation anglo-saxonne « SAP » pour Data Service Access Points).

Le plan de contrôle 31 configure le plan utilisateur 30 et gère notamment la mobilité, l'allocation de ressources radio, le routage et le relayage. La communication transversale avec les couches est gérée ou négociée à travers les points d'accès de contrôle (control SAPs). Le plan de contrôle 31 est organisé de façon à permettre des optimisations inter-couches connues de l'Homme du métier en s'appuyant sur des informations remontées par les diverses couches, les fonctions de contrôle pouvant être regroupées.

Le plan de sécurité 33 prend en charge les différentes caractéristiques de sécurité et ce plan est configuré en fonction du niveau de sécurité requis pour une utilisation donnée de l'interface radio. Il sécurise les couches protocolaires à travers les points d'accès service SAPs de sécurité.

Le plan de gestion 32 garantit notamment une configuration adéquate et une supervision des couches. Il est compatible avec les exigences SDR. Il accède aux couches protocolaires via les points d'accès SAPs de gestion.

Une association des modules AHMM/RSN/RRC dans le plan de contrôle 31 permet de centraliser les traitements d'optimisation intercouches en limitant le volume des échanges d'information intercouche, cet assemblage étant interfacé par le plan de contrôle à l'ensemble des autres couches et fonctions de la forme d'onde.

Un exemple de pile protocolaire selon l'invention est illustré à la figure 3.

La sous-couche de convergence CS, 35, assure l'interface avec les différents types de services et gère les sessions (protocole internet IP, orienté connexion, messages courts sans connexion, etc.). Elle utilise les services de gestion de mobilité pour accéder à une zone de couverture radio. Le module de gestion de mobilité AHMM, 36, prend en charge le support à la mobilité dans les zones radio couvertes et aux mécanismes tels que l'affiliation et dans le cas de groupements (ou clustering), la mobilité inter-cluster (handover) et la recherche de poste (ou paging) dans la zone couverte. Dans le cas de groupement hiérarchique, AHMM gère les zones de localisation (groupes de zones couvertes par les liaisons radio). AHMM est sous le contrôle du plan de sécurité pour l'authentification des entités participantes. AHMM fait appel à des bases de données distribuées parmi les différents équipments du réseau Ad Hoc.

AHMM utilise l'entité RSN, 37, pour accéder aux routes d'une zone de couverture. RSN réalise le routage Ad Hoc radio en complément du routage NAS (Non Access Stratum) i.e, toutes les fonctions intervenant dans le processus de routage, telles que la détection de présence d'un équipement radio, la construction de liste de voisins et de routes, la sélection de route, etc. Il peut supporter à la fois les protocoles réactifs et proactifs. Dans le cas d'une approche par groupement ou groupe (cluster), le module RSN prend en charge la gestion d'un groupe (création, modification, effacement des équipements radio déclarés au niveau d'un groupe). RSN utilise le contrôle de ressource radio RRC, 38, pour adapter les décisions de routage aux conditions radio et pour activer de manière effective un lien radio associé à une route virtuelle.

RRC contrôle la configuration pour des accès aux ressources radio localisées au niveau d'un noeud dans le cas de réseau à plat, non hiérarchisé. C'est lui qui décide de la valeur de la fréquence de la porteuse à utiliser et de l'ensemble des modes de transmission (schéma de codage, protection ARQ, etc.) qui peuvent satisfaire à la requête de qualité de service QoS. Cela inclut la configuration entrée multiple sortie multiple, plus connue sous l'abréviation anglo-saxonne « MIMO » lorsque le MIMO est activé. Dans le cas d'un groupement (cluster), l'instance de protocole RRC localisée dans l'équipement désigné comme le chef du groupe contrôle les ressources radio des noeuds localisés dans sa zone de couverture et les informe des paramètres qui leur sont alloués. Le chef de groupe est capable de collaborer avec les chefs de groupes adjacents. RRC gère l'état du lien radio. A ce propos, RRC collecte et filtre les mesures des couches basses ainsi que les mesures renvoyées par les entités participantes pour l'instance de RRC localisée dans le chef de groupe, dans le cas de groupement ; RRC reconfigure la ressource radio en conséquence. RRC gère aussi l'équilibre des charges entre les liens radio, le contrôle des paramètres de puissance long terme (faible fréquence de modification) et court terme (modification des paramètres du contrôle de puissance rapide). RRC implémente des algorithmes qui dépendent du schéma d'accès multiple. Dans le cas de mode de codage DS-CDMA, il gère la macro-diversité (liens impliqués dans le routage coopératif). Dans le cas de codage à accès multiple de type TDMA (time division multiple access) et/ou OFDMA (orthogonal frequency division multiple access), RRC gère la synchronisation du sous-réseau ainsi que le protocole de réglage d'avance temporelle des émissions.

AHMM, RRC, et RSN appartiennent au plan de contrôle 31. Leurs signalisations PDUs (protocol data units) sont transmises à la couche de contrôle du lien radio RLC dans le plan utilisateur pour la transmission à leurs entités homologues. AHMM, RRC, et RSN sont regroupés et réalisent des optimisations inter-couches en s'appuyant sur des informations issues des diverses autres couches et reçues dans le plan de contrôle.

La couche de convergence de données de sous-réseau 39 connue sous l'acronyme anglo-saxon SNDC (Sub Network Dependent Convergence) adapte le flux de trafic IP à l'interface radio. La couche de convergence supporte à la fois les flux du protocole Internet IPv4 et du protocole Internet IPv6. La compression d'en-tête peut être activée et plusieurs protocoles connus de l'Homme du métier peuvent être utilisés. Une instance de SNDC peut être créée par flux de trafic.

Le contrôle de diffusion broadcast/Multicast 40 de la couche de contrôle de diffusion connue sous l'acronyme anglo-saxon BMC (Broadcast/Multicast Control) adapte les flux de données broadcasting/multicasting à la zone de couverture. Il gère aussi la notification de services aux destinataires, notification qui leur permet d'activer la réception d'un service désiré.

Le protocole de la couche L2RTP, 41, fournit des tunnels pour le relayage régénératif où le format de transmission n'est pas nécessairement identique entre la réception et la re-transmission. Du fait que le routage peut être multichemins (plusieurs chemins en parallèle), un bloc d'information peut être dupliqué au niveau d'un noeud de relayage. L2RTP gère les mécanismes pour éviter des duplications non nécessaires.

La couche de convergence de données de sous-réseau SNDC, le module L2RTP et BMC appartiennent au plan utilisateur 30.

Toutes les couches qui ont été décrites utilisent la couche de contrôle de lien radio RLC pour transmettre leurs PDUs à leur entité paire.

RLC génère le transfert de données (soit du trafic, soit de la signalisation) au niveau d'un bond radio. Il gère les modes de transferts connus de l'état de l'art : transparent, acquitté, non-acquitté. Pour cela, il implémente plusieurs procédés tels que la segmentation et le réassemblage, la détection de duplication et la correction d'erreur ARQ. RLC supporte le rétablissement de liens dans le cas d'une suspension temporaire d'un lien radio du fait de la perte/de la récupération ou du passage en mode silence. RLC peut être configuré pour renvoyer le taux d'erreur de transfert à RRC. Une instance RLC peut être créée par flux d'information.

La couche de contrôle d'accès au medium ou MAC, 50, (figure 4), séquence l'accès au support physique d'une manière temps réel et réalise des adaptations rapides du format de transmission parmi l'ensemble des formats fournis par RRC, sur une base de trame par trame et selon différents types de fluctuations tels que les variations débit de la source de données, la configuration de transmission discontinue DTX, etc. MAC applique des priorités entre les flux de RLC, 51. La couche de contrôle MAC gère aussi les mécanismes de d'accès multiple connu sous l'acronyme anglo-saxon CSMA (Carrier Sense Multiple Access) ou des accès aléatoires (selon le type d'accès qui est activé). Cette même couche MAC exécute une surveillance des signaux voisins et rapporte à RRC (transmet l'information de détection à RRC qui active ou non le décodage de message, pour la coopération avec la découverte de route implémentée dans RSN). La couche MAC peut être configurée par RRC pour renvoyer les mesures de qualité de trafic/signalisation et les mesures de volume de données. La couche de contrôle MAC implémente l'avance temporelle dans le cas d'accès de type TDMA et/ou OFDMA.

En plus du chiffrement qui peut être fait à la source de trafic dans le NAS, le chiffrement de la signalisation ou des blocs de données peut être fait au niveau MAC/RLC sous contrôle du plan de sécurité.

La couche physique PHY, 52, implémente le traitement de signal, i.e, la modulation, le codage de canal et l'entrelacement, la détection d'erreur par code correcteur d'erreur CRC, le traitement des retransmissions au niveau couche physique ARQ hybride si ce dernier est activé, le brouillage (ou en anglo-saxon « Scrambling ») des bits et des symboles. Avec le codage à accès multiples CDMA, la couche physique PHY implémente l'étalement et la macro-diversité. Dans le cas du CDMA ou bien du codage orthogonal en fréquence OFDM, la couche PHY implémente le contrôle de puissance rapide et le traitement MIMO. La protection du signal physique (TRANSEC) peut être implémentée dans la couche physique PHY ou être externalisée selon l'architecture de sécurité requise.

Chaque couche implémente un protocole pair à pair (connu sous l'expression anglo-saxonne « peer-to-peer ») et l'échange d'unités de données de protocole PDUs (protocol data units) associé, avec l'entité homologue localisée soit au niveau du noeud voisin pour les couches basses ou dans le noeud destinataire multi-sauts pour les couches supérieures, comme il est illustré dans le plan utilisateur à la figure 4 dans l'exemple de relayage régénératif. Les protocoles et les PDUs sont des candidats potentiels pour la standardisation pour une interopérabilité inter-équipement alors que les algorithmes de décision qui optimisent la performance de l'architecture selon l'invention peuvent rester propriétaires. Les primitives de services pourraient être standardisées selon la granularité qui sera décidée pour la standardisation SDR.

### Réseaux à plat et/ou réseaux organisés groupes

La pile protocolaire selon l'invention supporte à la fois le routage à plat, expression connue de l'Homme du métier et le routage organisé en groupes. L'organisation hiérarchique est aussi supportée et, a priori, pourraît être réservée à des scénarios où un noeud devient point d'accès centralisé du réseau pour la signalisation et le trafic (ex scénario AHT/NLI). La transition dynamique entre le mode à plat et le mode groupe et hiérarchisé est assurée par la reconfiguration de RRC et de RSN sans modifier le comportement de l'architecture. Un exemple avec le protocole de routage dynamique OLSR (Optimized Link State Routing Protocol) et le protocole hiérarchisé HOLSR (Hierarchical OLSR) est donné ci-après. On peut noter que le protocole OLSR est compatible et peut gérer des réseaux très étendus en utilisant une extension « fisheye » (terme consacré dans le domaine technique) ou en utilisant la version hiérarchisée HOLSR.

En fonction de la topologie courante du réseau, i.e, dépendant du nombre de noeuds dans un voisinage donné ou à proximité, les noeuds sont capables de prendre plusieurs rôles dont quelques exemples sont donnés ci-après.

Noeud membre, i.e, un noeud ordinaire dont l'instance RRC peut être exécutée dans deux modes :
1 - en l'absence d'un chef de groupe dans le voisinage : choix autonome de ressources radio en collaboration avec MAC (configuration à plat),
2 - en mode esclave, i.e, l'usage de la ressource radio est soumis au chef de groupe auquel il est attaché ; RRC implémente les messages protocolaires pour des requêtes de ressources, des réceptions d'allocation et l'exécution.

Chef de groupe : l'instance RRC localisée dans le chef de groupe implémente le protocole et l'algorithme pour le contrôle et l'allocation des ressources radio aux autres noeuds. Ceci est typiquement adapté lorsque la densité de noeuds augmente.

Noeud passerelle : réalise l'interface entre deux ou plus de deux groupes (et appartient à ces groupes).

Noeud chef de groupe et noeud passerelle : combinaison des deux rôles. Cela signifie l'adoption d'une structure hiérarchique et est typiquement adapté aux scénarios où un noeud devient point d'accès centralisé du réseau (ex : ATH et NLI).

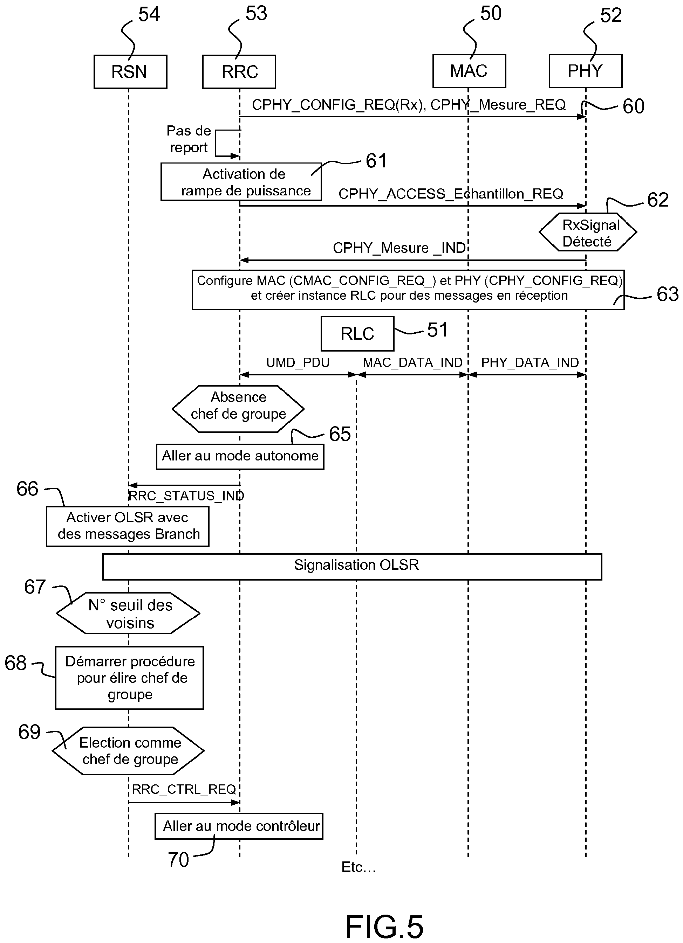

Lorsque les noeuds commutent d'un rôle à un autre, RRC et RSN sont reconfigurés de manière dynamique afin que les algorithmes et les protocoles soient activés ou inhibés en conséquence. Un exemple est donné à la figure 5.

Lorsqu'un noeud est mis sous tension, il a initialement un rôle de noeud membre basique, RRC, 53, est en mode autonome et active 60 la couche PHY pour la détection de voisins. La couche PHY est configurée par RRC pour lui renvoyer des mesures associées à la détection d'un signal au-dessus d'un seuil donné. Si rien n'est détecté, ceci signifie que des noeuds voisins potentiels transmettent avec un niveau de puissance trop faible. Ensuite RRC active l'envoi d'un signal 61 avec une montée en puissance progressive (procédure de sondage). Le fait que la transmission soit faite avec une rampe de signal, doit être vu comme une alerte pour les noeuds voisins potentiels, signifiant qu'un participant ou tiers cherche à les atteindre. Ils peuvent ainsi augmenter leur montée en puissance d'une façon telle qu'ils ne puissent être entendus.

Lorsqu'un signal voisin est détecté 62, RRC configure 63 et active PHY, 52, MAC 50 et RLC 51 pour une réception de message et de décodage.

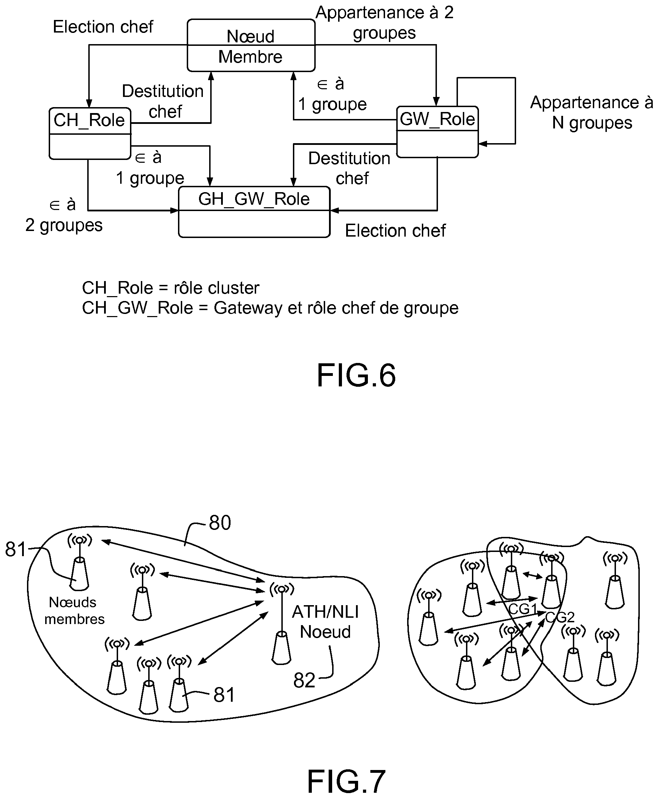

Un marqueur dans les messages reçus indique le rôle de l'émetteur. Si l'émetteur est un chef de groupe l'instance RRC du noeud affilié commute dans un mode esclave. Si non, il reste en mode autonome 65. RRC indique son statut à RSN, 54. Ce dernier cas est représenté en figure 6.

RSN active le protocole OLSR 66 et configure son algorithme en mode à plat non hiérarchisé. Ainsi la découverte des voisins est activée. Les messages Hello sont renvoyés de PHY à RSN via MAC et RLC, dans le plan utilisateur alors que les mesures sont reportées des couches basses à RRC dans le plan de contrôle. Des messages supplémentaires plus connus sous l'expression « message Branch » sont ajoutés aux messages de contrôle selon des procédés connus de l'Homme du métier.

Lorsqu'un « nombre seuil de voisins » est atteint 67 (le seuil a été par exemple configuré par OAM dans le plan de gestion et le seuil a établi une taille de cluster minimum), cela signifie qu'une procédure 68 pour la création d'un groupe et l'élection du chef de groupe devrait être démarrée par RSN. Si le noeud est élu, 69 alors l'instance RRC se met dans un état de contrôle 70 et ainsi est reconfigurée avec le protocole et l'algorithme adapté. Si non, l'instance RRC est dans le mode esclave et est reconfigurée pour traiter les messages protocolaires pour des requêtes de ressource, la réception de l'allocation, et l'exécution.

Dans les deux cas, une procédure de contrôle de puissance est démarrée au niveau RRC afin de limiter la puissance Tx, i.e, pour limiter la couverture à un seuil = « nombre maximum de voisins », ce seuil maximum a été configuré par OAM dans le plan de gestion et a été établi pour la taille maximum de cluster ou groupe.

Le procédé OLSR pour tenir à jour la connaissance de ses voisins est réalisé de façon continue. PHY continue de reporter les mesures à RRC pour des signaux nouvellement détectés.

Pour les accès de type TDMA et/ou OFDMA, des groupements adjacents peuvent soit implémenter le partage de fréquence (avec une coordination de ressource radio) si le trafic est limité ou, plus souvent, implémenter un motif de réutilisation de fréquence d'au moins 3 fréquences (alors le récepteur implémente la scrutation ou scanning multi-porteuse).

Dans les deux cas, lorsqu'un noeud détecte que plusieurs messages contiennent un indicateur ou « flag » indiquant que les émetteurs sont des chefs de groupe, cela signifie que le noeud est à portée ou sous couverture d'au moins deux groupes et ainsi le noeud est un candidat pour devenir noeud passerelle entre ces groupes. Ainsi, l'algorithme de reconfiguration RSN devrait opérer en accord avec l'algorithme de sélection OLSR MPR.

La transition vers un routage hiérarchique, i.e, vers la centralisation des flux de trafic à des noeuds spécifiques, peut être faite de la même manière avec la limitation que seuls les noeuds autorisés peuvent jouer ce rôle, par exemple des noeuds ATH ou NLI. Le retour aux modes de groupement non hiérarchiques est effectué selon une méthode dédiée.

Afin de contrôler les dynamiques des groupes, on peut interdire qu'un noeud à forte mobilité (aéronautique, par exemple) ne puisse prendre le rôle de chef de groupe CH (Cluster Head) ou de passerelle GW. Ce noeud ne ne peut être un MPR ou OLSR. Cette interdiction est gérée par la couche protocolaire RSN via un marqueur de protocole qui indique la nature du noeud, par exemple un véhicule, un portable, un véhicule aéronautique lent ou rapide, ATH : At The Hait, NLI : Naval and Land Interworking. Un noeud aéronautique faiblement mobile tel qu'un drone, du fait des conditions de propagation de ses liens radio avec des terminaux au sol, est automatiquement sélectionné comme un MPR par OLSR, sauf si ce noeud doit être configuré par la fonction d'administration réseau OAM comme non éligible du fait de contraintes opérationnelles. Ainsi il devient un candidat naturel au rôle de passerelle GW entre les zones.

### Gestion des schémas d'accès multiples

La pile protocolaire selon l'invention permet l'activation de plusieurs schémas d'accès en fonction du scénario opérationnel en place. Un exemple va être développé : en considérant que les équipements mobiles sont limités du point de vue de la consommation de puissance, de gain d'antenne, et du débit. D'un autre côté, les équipements ATH et NLI définis ci-après peuvent bénéficier d'un gain d'antenne plus élevé et supporter des capacités de communication élargies.

Un exemple typique de schéma d'accès représenté à la figure 7 est le suivant :
- les équipements mobiles 81 transmettent avec une modulation hybride TDMA/FDMA simple porteuse dans des conditions de couverture faible. Un équipement mobile isolé et plus éloigné utilise l'étalement pour communiquer avec une passerelle de groupe ou Cluster Gateway, i.e, DS-CDMA est appliqué au-dessus du schéma d'accès TDMA/SC-(O)FDMA.
- Les équipements ATH/NLI 82 communiquent simultanément avec plusieurs équipements mobiles. Pour un créneau temporel donné TDMA, ces équipements sont capables de recevoir plusieurs porteuses FDMA qui ont été synchronisées du côté de l'émetteur mobile de façon telle qu'elles soient orthogonales au niveau du récepteur ATH/NLI (d'un point de vue équipement radio ATH/NLI, le signal reçu est comme un TDMA/OFDMA). De manière symétrique, l'émetteur ATH/NLI est cadencé dans un TDMA/OFDMA vers chacun des récepteurs TDMA/SC-(O)FDMA mobiles.

Dans les équipements mobiles, RRC implémente des algorithmes pour la gestion de ressources radio dans les modes TDMA/SC-(O)FDMA. Lorsqu'un équipement mobile passe dans le mode ATH, le noeud passe dans le mode chef de groupe « cluster head » et le mode noeud passerelle « cluster gateway » et RRC est reconfiguré pour activer l'algorithme de ressource multi-porteuse. Dans le sens descendant, du noeud chef de groupe ATH vers les noeuds membres mobiles, RRC implémente la modulation OFDMA par allocation d'une sous-porteuse ou d'un groupe de sous-porteuses à des noeuds membres OTM. Dans la direction montante, le chef de groupe collecte tous les signaux simple porteuse des noeuds membres mobiles et les combinent comme un signal OFDMA ; d'un point de vue des émetteurs noeuds membres, le signal est SC-OFDMA alors que le récepteur du noeud chef de groupe ATH a une visibilité sur les sous-porteuses i.e OFDMA.

RRC utilise les primitives CPHY_CONFIG_REQ et MAC_CONFIG_REQ du plan de contrôle inter-couches pour reconfigurer MAC et PHY. Certains équipements ne commutent pas d'un mode à un autre (par exemple un équipement naval), ainsi leur entité RRC est configurée à l'initialisation (mise sous tension) contrairement à un terminal mobile équipé avec une antenne à gain montée sur un mât qui peut commuter du mode mobile au mode ATH et vice versa et pour lequel l'architecture selon l'invention permet une reconfiguration dynamique.

### Gestion de MIMO multiple entrée multiple sortie

L'architecture selon l'invention est compatible de la mise en oeuvre du procédé multiple entrée multiple sortie ou MIMO pour des liens radio individuels aussi bien que pour les multi-liens coopératifs multi-utilisateurs MU-MIMO.
Du fait d'une synchronisation pointue et des contraintes de contrôle de puissance, le MIMO peut être réservé aux scénarios suivants :
- lorsque le chef de groupe est stable et joue le rôle de concentrateur de trafic comme passerelle de groupe, i.e, scénario ATH et/ou NLI,
- dans les zones de densité élevée, pour décharger des passerelles de groupe par équilibrage de charge.

L'exemple pratique illustré à la figure 7 concerne des terminaux portables mobiles 81 avec une antenne simple alors que les noeuds ATH/NLI 82 peuvent être équipés de réseaux antennaires, lesdits équipements faisant partie par exemple d'une même zone 80 ou groupe.
Chaque entité chef de groupe RRC est configurée avec un algorithme de décision multi-utilisateurs MIMO. Il reçoit périodiquement des mesures de qualité des couches basses et aussi des rapports de mesures des noeuds membres. Cette entité centralisée RRC supervise le contrôle de puissance des noeuds membres et possède ainsi une connaissance de la puissance réellement transmise par les noeuds membres. Lorsqu'elle détecte une dégradation dans la qualité reçue et une perte de puissance des noeuds membres, elle peut décider d'activer la fonction multi-utilisateurs MIMO ou MU-MIMO, i.e, mettant en ordre un ensemble de noeuds membres pour transmettre une information de flux sur la ressource radio. Au niveau du chef de groupe, il y a une coordination entre RSN et RRC pour cette configuration de transmission. Le chef de groupe RRC configure ses couches RLC, MAC et PHY et transmet des messages de signalisation RRC à des noeuds membres qui sont concernés, incluant le temps de commutation à une transmission coopérative.

### Applications diverses

L'architecture selon l'invention trouve notamment son application dans les domaines listés ci-après.

En Mouvement: le réseau est un réseau Ad-Hoc mobile multi-bonds. Il gère une auto organisation des équipements des terminaux de communication incluant des services à débit élevé, tels que les téléphones portables, etc.

A l'Arrêt: l'architecture peut être utilisée avec des terminaux fixes ou semi-fixes qui agissent comme une ossature (Backbone) de façon à s'interfacer avec une infrastructure logistique, ou d'autres réseaux en mouvement. Ceci peut être réalisé, par exemple avec un terminal mobile équipé avec une antenne à gain montée sur un mat, la forme d'onde du terminal est ensuite configurée pour supporter la capacité de communication étendue associée avec des services (débit plus élevé, couverture étendue).

Inter connexion maritime/naval et terrestre : l'architecture selon l'invention est adaptée pour gérer les communications entre des terminaux « maritimes » (équipements montés sur des bateaux) et des terminaux terrestres.

L'architecture radio selon l'invention présente notamment les avantages suivants :
- elle définit des ensembles fonctionnels aussi indépendants que possibles les uns des autres,
- elle est structurée en couches et modules,
- elle supporte des interfaces et API compatibles de plusieurs formes d'ondes ("legacy", futures, etc.),
- elle organise les optimisations inter couches dans un cadre structuré et limitant les échanges inter couches,
- elle est "ouverte" et propose des interfaces standardisables,
- elle permet l'interopérabilité entre équipements multi fournisseurs,
- elle permet l'intégration progressive de nouvelles technologies aussi bien au niveau couches basses que couches hautes,
- elle supporte l'optimisation de la Qualité de Service par cross layering,
- elle supporte un mode de transmission adaptatif (re-configuration dynamique et en ligne en fonction des conditions de transmission),
- elle supporte plusieurs voies radio,
- elle est compatible de différents types d'accès,
- elle intégre l'aspect Ad Hoc (routage, auto-configuration, etc.) en mode à plat comme en mode clustérisé et hiérarchisé,
- elle supporte un mode gestion et supervision sécurisé locale ou à distance,
- elle est utilisable pour différentes gammes de produits terrestre, aéronautique ou naval,
- elle prend en compte des contraintes de sécurité fortes,
- elle s'intégre dans un environnement radio logicielle,
- elle permet de mutualiser à la fois les spécifications et le développement entre produits et gammes de produits et le savoir faire du métier.

## Revendications

1. Pile protocolaire pour réseau de type Ad-Hoc comprenant des modules existants des architectures de troisième génération 3GPP, ladite pile protocolaire comprenant un plan d'accès radio, un module de gestion de mobilité AHMM et un module de contrôle de ressource radio RRC, ledit réseau de type Ad-Hoc pouvant être organisé en plusieurs groupes (80) ou clusters, un groupe correspondant à un regroupement de ressources radio (81) pour une zone de couverture donnée, la pile protocolaire est **caractérisée en ce qu'**elle comporte en plus lesdits éléments suivants :
• un module de routage RSN (37) disposé entre le module de gestion AHMM (36) et le module de contrôle de ressource radio (38), une partie de la gestion de mobilité étant gérée dans le plan d'accès afin de gérer des transferts ou « handovers » entre les groupes, dans le cas d'un réseau organisé en groupes d'utilisateurs ou « clusterisé »,
• le module RRC (38) gère les décisions de « handover » et la gestion de la ressource radio,
• ladite pile protocolaire comprenant en plus, une couche L2RTP (41) adaptée à traiter le relayage régénératif au niveau radio au niveau d'un paquet de données,
• un plan de sécurité (16) permettant d'isoler des fonctions de sécurité.

2. Pile protocolaire selon la revendication 1 **caractérisée en ce que** lesdits modules AHMM/RSN/RRC (36, 37, 38) sont associés de façon à centraliser les traitements d'optimisation intercouches en limitant le volume des échanges d'information intercouche, cet assemblage étant interfacé par le plan de contrôle (31) à l'ensemble des autres couches et fonctions de la forme d'onde utilisée dans le réseau.

3. Pile protocolaire selon la revendication 1 **caractérisée en ce qu'**elle comporte en plus un module de supervision à distance OAM.

4. Pile protocolaire selon la revendication 1 **caractérisée en ce qu'**elle comporte un module de supervision locale OAM, au niveau de chacun des noeuds du réseau Ad Hoc.

5. Pile protocolaire selon la revendication 1 **caractérisée en ce que** dans le module de contrôle des ressources radio, elle comporte un processeur lent et **en ce que** le module de contrôle d'accès au medium ou MAC est adapté pour séquencer l'accès au support physique d'une façon temps réel et réaliser des adaptations rapides du format de transmission parmi l'ensemble des formats fournis par le module RRC, sur une base de trame par trame et en accord avec différents types de fluctuations telles que les variations de flux de source, la configuration de transmission discontinue.

6. Pile protocolaire selon la revendication 1 **caractérisée en ce qu'**elle comporte une étape de reconfiguration dynamique des algorithmes et protocoles des couches RSN et RRC.

7. Pile protocolaire selon la revendication 1 **caractérisée en ce qu'**elle comporte une étape de reconfiguration des algorithmes de gestion des ressources radio de RRC et une étape de reconfiguration des couches MAC et PHY.

## Patentansprüche

1. Protokollstapel für ein Netzwerk des Ad-hoc-Typs, umfassend existierende Module von Architekturen der dritten Generation 3GPP, wobei der Protokollstapel eine Funkzugangsebene, ein Mobilitätsmanagementmodul AHMM und ein Funkressourcensteuermodul RRC umfasst, wobei das Netzwerk des Ad-hoc-Typs in mehrere Gruppen (80) oder Cluster organisiert werden kann, wobei eine Gruppe einer Gruppierung von Funkressourcen (81) für einen gegebenen Abdeckungsbereich entspricht, wobei der Protokollstapel **dadurch gekennzeichnet ist, dass** er außerdem die folgenden Elemente umfasst:
• ein Routingmodul RSN (37), das zwischen dem Managementmodul AHMM (36) und dem Funkressourcensteuermodul (38) angeordnet ist, wobei ein Teil des Mobilitätsmanagements in der Zugangsebene verwaltet wird, um im Falle eines Netzwerks, das zu Nutzergruppen organisiert oder "clusterisiert" ist, Übergaben oder "Handovers" zwischen den Gruppen zu verwalten,
• das Modul RRC (38) verwaltet die "Handover"-Entscheidungen und die Verwaltung der Funkressource,
• der Protokollstapel umfasst ferner eine L2RTP-Schicht (41) zum Verarbeiten des regenerativen Weiterleitens auf Radioniveau zum Niveau eines Datenpakets,
• eine Sicherheitsebene (16), mit der Sicherheitsfunktionen isoliert werden können.

2. Protokollstapel nach Anspruch 1, **dadurch gekennzeichnet, dass** die Module AHMM/RSN/RRC (36, 37, 38) so assoziiert sind, dass sie Zwischenschicht-Optimierungsverarbeitungen zentralisieren, indem sie das Volumen von Zwischenschicht-Informationsaustauschen begrenzen, wobei diese Baugruppe durch die Steuerebene (31) mit allen anderen Schichten und Funktionen der in dem Netz benutzten Wellenform verbunden ist.

3. Protokollstapel nach Anspruch 1, **dadurch gekennzeichnet, dass** er ferner ein Fernüberwachungsmodul OAM umfasst.

4. Protokollstapel nach Anspruch 1, **dadurch gekennzeichnet, dass** er ein lokales Überwachungsmodul OAM auf dem Niveau von jedem der Ad-hoc-Netzwerkknoten umfasst.

5. Protokollstapel nach Anspruch 1, **dadurch gekennzeichnet, dass** er in dem Steuermodul von Funkressourcen einen langsamen Prozessor umfasst, und dadurch, dass das Steuermodul für Zugang zum Medium oder MAC zum Sequenzieren des Zugangs zum physischen Träger in Echtzeit und zum Realisieren von schnellen Adaptionen des Übertragungsformats unter allen vom RRC-Modul gelieferten Formaten auf Frame-für-Frame-Basis und im Einklang mit unterschiedlichen Fluktuationstypen wie den Quellflussvariationen, der Konfiguration von diskontinuierlicher Übertragung ausgelegt ist.

6. Protokollstapel nach Anspruch 1, **dadurch gekennzeichnet, dass** er einen dynamischen Umkonfigurationsschritt von Algorithmen und Protokollen von RSN- und RRC-Schichten umfasst.

7. Protokollstapel nach Anspruch 1, **dadurch gekennzeichnet, dass** er einen Umkonfigurationsschritt von Managementalgorithmen von RRC-Funkressourcen und einen Schritt des Umkonfigurierens der MAC- und PHY-Schichten umfasst.

## Claims

1. A protocol stack for an ad hoc type network comprising existing modules from third generation 3GPP architectures, said protocol stack comprising a radio access plane, a mobility management module AHMM and a radio resource control module RRC, said ad hoc type network being able to be organized into several groups (80) or clusters, a group corresponding to a grouping together of radio resources (81) for a given coverage area, the protocol stack is **characterized in that** it additionally comprises the following items:
• a routing module RSN (37) arranged between the management module AHMM (36) and the radio resource control module (38), a part of the mobility management being managed in the access plane in order to manage transfers, or handovers, between the groups, in the case of a network that is organized into groups of users or "clusterized",
• the RRC module (38) manages handover decisions and radio resource management,
• said protocol stack additionally comprising an L2RTP layer (41) suitable for processing the radio-level regenerative relaying at the level of a data packet,
• a security plane (16) for isolating security functions.

2. The protocol stack as claimed in claim 1, **characterized in that** said AHMM/RSN/RRC modules (36, 37, 38) are combined so as to centralize the cross-layer optimization processing actions by limiting the volume of exchanges of cross-layer information, this assembling action being interfaced by the control plane (31) to all the other layers and functions of the waveform used in the network.

3. The protocol stack as claimed in claim 1, **characterized in that** it additionally includes a remote supervision module OAM.

4. The protocol stack as claimed in claim 1, **characterized in that** it includes a local supervision module OAM, at each of the nodes of the ad hoc network.

5. The protocol stack as claimed in claim 1, **characterized in that** in the radio resource control module, it includes a slow processor, and **in that** the medium access control module, or MAC, is suitable for sequencing the access to the physical medium in a real-time manner and for carrying out fast adaptations of the transmission format among the set of formats supplied by the RRC module, on a frame by frame basis and in accordance with various types of fluctuations such as source flow variations, discontinuous transmission configuration.

6. The protocol stack as claimed in claim 1, **characterized in that** it includes a dynamic reconfiguration step for algorithms and protocols of the RSN and RRC layers.

7. The protocol stack as claimed in claim 1, **characterized in that** it includes a step for reconfiguring RRC radio resource management algorithms and a step for reconfiguring the MAC and PHY layers.
